Europäisches Patentamt

European Patent Office

Office européen des brevets

(11) Publication number: **0 368 344 B1**

(12) EUROPEAN PATENT SPECIFICATION

(45) Date of publication of patent specification: **21.07.93** (51) Int. Cl.⁵: **C08F 10/00**, C08F 4/646

(21) Application number: **89120898.5**

(22) Date of filing: **10.11.89**

(54) Process for producing alpha-olefin polymers.

(30) Priority: **11.11.88 JP 286367/88**

(43) Date of publication of application:
**16.05.90 Bulletin 90/20**

(45) Publication of the grant of the patent:
**21.07.93 Bulletin 93/29**

(84) Designated Contracting States:
**BE DE FR GB IT NL**

(56) References cited:
**EP-A- 0 045 976**
**GB-A- 2 167 763**

**Journal of Molecular Catalysis, 56 (1989),
pages 156-169**

(73) Proprietor: **SUMITOMO CHEMICAL COMPANY,
LIMITED**
**5-33 Kitahama 4-chome Chuo-ku**
**Osaka-shi Osaka(JP)**

(72) Inventor: **Sasaki, Toshio**
**9, Yushudainishi-1-chome**
**Ichihara-shi(JP)**
Inventor: **Ebara, Takeshi**
**135, Iriyamazu**
**Ichihara-shi(JP)**
Inventor: **Jyohoji, Hirofumi**
**135, Iriyamazu**
**Ichihara-shi(JP)**
Inventor: **Mizunuma, Kooji**
**9, Yushudainishi-1-chome**
**Ichihara-shi(JP)**
Inventor: **Kawai, Kiyoshi**
**1-12-11, Minamihanazono**
**Chiba-shi(JP)**

(74) Representative: **Vossius & Partner**
**Siebertstrasse 4 P.O. Box 86 07 67**
**W-8000 München 86 (DE)**

## Description

This invention relates to a co-catalyst component used in the production of α-olefin polymers, and more particularly to a process for producing an α-olefin polymer quite low in the contents of catalyst residue and amorphous polymer and excellent in mechanical properties and processability which comprises using a catalyst system comprising a solid catalyst component containing at least magnesium, titanium, a halogen and an ester compound and a specified co-catalyst component.

As the method for producing a polymer of α-olefin such as propylene and butene-1 the method using a so-called Ziegler-Natta catalyst comprising a compound of a transition metal belonging to Group IV-VI of the periodic table and an organometallic compound of a metal belonging to Group I-III of the periodic table is well known. Particularly in the industrial production of α-olefin polymers, solid catalysts such as titanium type catalysts comprising titanium trichloride as transition metal compound and titanium-magnesium composite catalysts are widely used today.

In the titanium trichloride type solid catalyst, a halogen-containing aluminum compound such as diethylaluminum chloride is used as the organometallic compound of the co-catalyst. In such a polymerization process, catalyst residues such as halogen originating from co-catalyst remain in the formed α-olefin polymer, which make various troubles on stability and processability of the resulting α-olefin polymer. Accordingly, a particular equipment must be provided for removing the catalyst residues and stabilizing the polymer.

This disadvantage can be overcome either by enhancing catalyst activity expressed by the weight of resulting α-olefin polymer per unit weight of catalyst or by using a catalyst containing a small amount of the element making the cause of catalyst residues. By taking these measures, the above-mentioned equipment for removing catalyst residues can be made unnecessary and production cost of α-olefin polymer can be reduced.

On the other hand, in the case of a titanium-magnesium composite solid catalyst, there is used a ternary catalyst system to which are separately added a halogen-free organoaluminum compound such as triethylaluminum as organometallic compound of the co-catalyst and an electron donor for improving stereospecificity of the resulting α-olefin polymer. In such a polymerization process, no halogen originating from the co-catalyst is contained in the resulting α-olefin polymer. However, such a catalyst is insufficient in catalytic activity, so that catalyst residues originating from the solid catalyst remain in the polymer. That is to say, the above-mentioned problems are not completely solved in this process, too.

Further, in any of the above-mentioned solid catalysts, production of α-olefin polymer is accompanied by formation of amorphous polymer as a by-product in addition to the highly stereospecific α-olefin polymer having a high industrial value. This amorphous polymer is poor in industrial value, and it exercises greatly adverse influences upon the mechanical properties of processed articles, such as films or fibers of the α-olefin polymer. In addition, the formation of the amorphous polymer results in a loss of starting monomer, and the formation of amorphous polymer necessitates to provide a particular equipment for removing the amorphous polymer, which is quite disadvantageous from the industrial point of view. Thus, the catalyst system used in the production of α-olefin polymer must be a catalyst system which yields no amorphous polymer at all or yields only a very slight quantity of amorphous polymer.

GB-B-2,167,763 discloses a process for preparing a polyolefin by using a three component Ziegler-Natta catalyst. Two of the three components, i.e. an organoaluminum co-catalyst and a siloxane can be pre-reacted. The reaction conditions for this pre-reaction are not specified. In examples 11, 22 and 35 of D1 GB-B-2,167,763 a reaction takes place between triethylaluminum in a concentration of 1.66 mmoles per liter and phenyltriethoxy silane in a concentration of 0.93 mmoles per liter for 30 minutes at 30°C. The product of this reaction is neither investigated nor characterized.

It is the object of this invention to provide a process for producing α-olefin polymers by the use of an olefin-polymerizing catalyst system having so high a catalytic activity and stereospecificity as to make the removal of catalyst residue and amorphous polymer unnecessary.

This invention provides a process for producing α-olefin polymers which comprises polymerizing an α-olefin by the use of a catalyst system comprising three independent components, i.e. a titanium-magnesium type composite solid catalyst component, an organoaluminum component and an electron donor component, said organoaluminum component and said electron donor component being reacted together and put to use in the form of a reaction product of a specified state. This invention is characterized by satisfying the following conditions:

Thus, it is a process for producing α-olefin polymers which comprises homopolymerizing or copolymerizing an α-olefin by the use of a catalyst system comprising:

(A) a solid catalyst component (A) containing at least magnesium, titanium, a halogen and an ester compound as indispensable components, and

(B) a catalyst component (B) produced by reacting an organoaluminum compound represented by the general formula $R^1_m AlY_{3-m}$ ($R^1$ represents an aliphatic hydrocarbon group having 1 to 8 carbon atoms, Y represents a halogen, hydrogen or an alkoxy group having 1 to 20 carbon atoms, and m represents a number satisfying $2 \leq m \leq 3$) with an organic silicon compound represented by the general formula $R^2_n Si(OR^3)_{4-n}$ ($R^2$ represents an alicyclic hydrocarbon group or an aromatic hydrocarbon group having 5 to 20 carbon atoms, $R^3$ represents a hydrocarbon group having 1 to 20 carbon atoms, and n represents a number satisfying $0 \leq n \leq 3$) in the state of a solution so that the product of this reaction becomes satisfying the following formula:

$$0.2 \leq K \leq 2.2$$

wherein

$$K = \frac{m}{Z} \cdot \frac{S'}{S+S'}$$

[S represents the area of a peak in the $^{13}$C-NMR spectrum of the reaction product assignable to the Al-$R^1$ bond, S′ represents the area of a peak in the $^{13}$C-NMR of the product assignable to the Si-$R^1$ bond formed by the reaction with the organoaluminum compound, and Z represents the molar ratio of Si atoms to Al atoms in component (B)].

The use of the catalyst system of this invention brings about the following effects:

(1) Since the catalytic activity per solid catalyst and per titanium atom is very high, the contents of halogen atoms and titanium atoms closely related to colorization, stability and corrosion behavior of the polymer are very low, even if no particular treatment is effected for removing catalyst residues. That is, the equipment for removing catalyst residue is unnecessary, and the production cost of the olefin polymer can be reduced.

(2) Since the decrease in catalytic activity and stereospecificity with the lapse of time is very small, production of polymer per unit catalyst quantity can be enhanced by prolonging the polymerization time.

(3) By the use of the catalyst system of this invention, an $\alpha$-olefin polymer having a very high stereospecificity can be produced. Accordingly, the quantity of amorphous polymer formed as by-product is very small, and therefore an $\alpha$-

olefin polymer excellent in mechanical properties can be produced without removing amorphous polymer.

(4) Since the formation of low-stereospecificity polymer soluble in the polymerization solvent is very small, problems in process, such as deposition of polymer onto reactor, pipings and flush hopper, do not appear. Further, since the formation of soluble polymer is very small, the starting monomer can be utilized effectively.

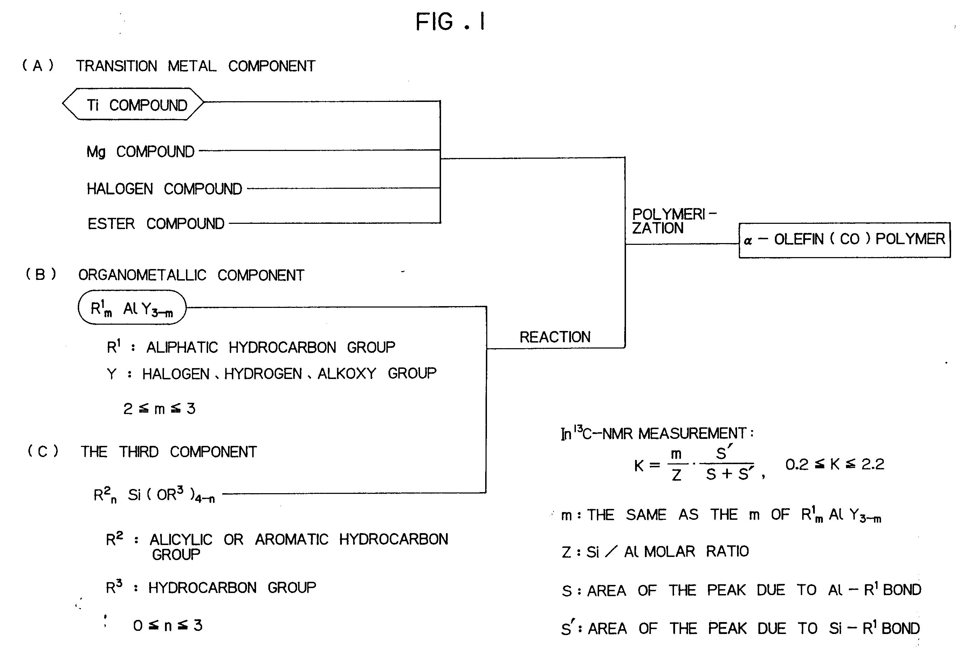

Figure 1 is a flow chart diagram for facilitating the understanding of this invention.

This flow chart diagram is nothing other than one typical example of the embodiments of this invention, and this invention is by no means limited by it.

(a) Solid catalyst component (A)

As the solid catalyst component (A) comprising at least magnesium, titanium, a halogen and an ester compound used in this invention, the so-called titanium-magnesium composite catalyst can be used.

As the method for producing such a solid catalyst component, the methods disclosed in JP-B-52-39431 (US-A-4107413) and 52-36786 (US-A-4157435) and JP-A-54-94590, 55-36203, 56-41206, 57-63310 (EP-A- 45975), 57-59916 (EP-A- 49436), 58-83006 (GB-A-2111066), 61-218606 (US-A-4672050), can be referred to. Examples of these methods include the following :

(1) A method which comprises pulverizing a magnesium halide and/or an alkoxymagnesium compound in the presence of an ester compound and thereafter treating it with a titanium compound such as $TiCl_4$.

(2) A method which comprises dissolving a magnesium halide and/or an alkoxymagnesium compound into an alcohol or ether, and thereafter treating the resulting solution with a titanium compound such as $TiCl_4$ and an ester compound (JP-A-58-83006) (Example 4 mentioned later).

(3) A method which comprises reducing an alkoxytitanium compound with an organomagnesium compound such as a Grignard reagent in the presence of an organic silicon compound having a Si-O bond to obtain a solid product, and treating the product with an ester compound and a mixture of an ether compound and $TiCl_4$ - (JP-A-61-218606) (Examples 1, 2, 6 and 7 mentioned later).

Said solid catalyst component (A) may be supported on a known porous material such as silica gel or porous polymer beads. As concrete examples of this process, those disclosed in JP-A-61-21109, 62-256802 and 63-289004 can be referred to. Examples of these methods include the following :

(1) A method which comprises treating silica gel with an organomagnesium compound such as a Grignard reagent, then reacting it with a halogenating agent and/or an alcohol, and thereafter treating the product with an ester and a titanium compound such as $TiCl_4$ (JP-A-61-21109) (Example 5 mentioned later).

(2) A method which comprises reducing an alkoxy-titanium compound with an organomagnesium compound such as a Grignard reagent in the presence of silica gel or porous polymer beads and an organic silicon compound having a Si-O bond to obtain a solid product, and treating the product with an ester compound and a mixture of an ether compound and $TiCl_4$ (JP-A-63-289004) (Example 3 mentioned later).

The titanium compounds which can be used for the synthesis of the solid catalyst component (A) of this invention are represented by the following general formula:

$$Ti(OR)^4{}_aX_{4-a}$$

wherein $R^4$ represents a hydrocarbon group having 1 to 20 carbon atoms, X represents a halogen atom, and a represents a number satisfying $0 \leq a \leq 4$. Concrete examples of said titanium compound include titanium tetrachloride, ethoxytitanium trichloride, butoxytitanium trichloride, phenoxytitanium trichloride, dibutoxytitanium dichloride, diphenoxytitanium dichloride, tributoxytitanium chloride, tetraethoxytitanium, tetrabutoxytitanium and tetraphenoxytitanium.

As the magnesium compound, the followings can be used.

As reductive compound having a magnesium-carbon bond or a magnesium-hydrogen bond, diethylmagnesium, dibutylmagnesium, dihexylmagnesium, ethylmagnesium chloride, butylmagnesium chloride, hexylmagnesium chloride, butylethoxymagnesium and butylmagnesium hydride can be used preferably. These magnesium compounds may be used in the form of a complex compound with an organoaluminum compound. On the other hand, as non-reductive magnesium compound, magnesium dihalides such as magnesium dichloride and magnesium dibromide; alkoxymagnesium compounds such as methoxymagnesium chloride, ethoxymagnesium chloride, butoxymagnesium chloride, phenoxymagnesium chloride, diethoxymagnesium, dibutoxymagnesium and diphenoxymagnesium; and magnesium carboxylates such as magnesium laurate and magnesium stearate can be used preferably.

These non-reductive magnesium compounds may be those which have been synthesized from reductive magnesium compounds either previously or at the time of preparation of the solid catalyst.

As the ester compound, mono- and poly-basic carboxylic esters such as aliphatic carboxylic esters, olefinic carboxylic esters, alicyclic carboxylic esters and aromatic carboxylic esters are used. Concrete examples of said ester compound include methyl acetate, ethyl acetate, phenyl acetate, methyl propionate, ethyl propionate, ethyl butyrate, ethyl valerate, methyl acrylate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methyl ethyl phthalate, diethyl phthalate, di-n-propyl phthalate, diisopropyl phthalate, di-n-butyl phthalate, diisobutyl phthalate, di-n-heptyl phthalate, di-n-octyl phthalate and diphenyl phthalate.

(b) Organoaluminum compound

The organoaluminum compound used for preparation of catalyst component (B) of this invention, prepared by reacting an organoaluminum compound and an organic silicon compound, is represented by the following general formula:

$$R^1{}_mAlY_{3-m}$$

wherein $R^1$ represents an aliphatic hydrocarbon group having 1 to 8 carbon atoms, Y represents a halogen, hydrogen or an alkoxy group having 1 to 20 carbon atoms, and m represents a number satisfying $2 \leq m \leq 3$.

Concrete examples of said organoaluminum compound include trialkylaluminums such as triethylaluminum, triisobutylaluminum and trihexylaluminum; dialkylaluminum hydrides such as diethylaluminum hybride and diisobutylaluminum hydride; dialkylaluminum alkoxides such as diethylaluminum methoxide, diethylaluminum ethoxide, diethylaluminum propoxide, diisobutylaluminum methoxide and diisobutylaluminum ethoxide; mixtures of trialkylaluminum and a dialkylaluminum halide; and mixtures of trialkylaluminum and a dialkylaluminum alkoxide.

Among these organoaluminum compounds, those represented by general formula $Et_mAlY_{3-m}$ - (Et is an ethyl group and m represents a number satisfying $2 \leq m \leq 3$) are preferable, and triethylaluminum is particularly preferable.

(c) Organic silicon compound

The organic silicon compounds used for preparation of catalyst component (B) of this invention are represented by the general formula $R^2{}_nSi(OR^3)_{4-n}$ ($R^2$ represents an alicyclic hydrocarbon group or an aromatic hydrocarbon group having 5 to 20 carbon atoms, $R^3$ represents a hydrocarbon group having 1 to 20 carbon atoms, and n represents a number satisfying $0 \leqq n \leqq 3$).

Concrete examples of said organic silicon compound include tetramethoxysilane, tetraethoxysilane, tetrabutoxysilane, tetrapropoxysilane, tetraisopropoxysilane, tetraphenoxysilane, cyclohexyltrimethoxysilane, cyclohexyltriethoxysilane, phenyltrimethoxysilane, phenyltriethoxysilane, dicyclohexyldimethoxysilane, dicyclohexyldiethoxysilane, diphenyldimethoxysilane and diphenyldiethoxysilane. Among these organic silicon compounds, cyclohexyltrimethoxysilane and phenyltrimethoxysilane are preferred.

(d) Preparation of catalyst component (B)

The catalyst component (B) of this invention is prepared by reacting the above-mentioned organoaluminum compound and organic silicon compound in solution.

This reaction is carried out in an atmosphere of inert gas such as nitrogen or argon.

This reaction is carried out in solution. The reaction may be carried out either in the absence of a solvent or in the presence of a solvent. Preferably, the reaction is carried out in the presence of a solvent, because of easiness of procedure.

The solvents which can be used for this reaction include aliphatic hydrocarbons such as hexane, heptane, octane and decane; aromatic hydrocarbons such as toluene and xylene; alicyclic hydrocarbons such as cyclohexane, methylcyclohexane and decalin; and ether compounds such as diethyl ether, dibutyl ether, diisoamyl ether and tetrahydrofuran.

The reaction temperature is -50°C to 200°C, preferably -30°C to 120°C, and particularly -25°C to 100°C.

The reaction time is not critical so far as the K value [definition of K will be detailed in paragraph (e)] satisfies $0.2 \leqq K \leqq 2.2$. Generally speaking, the reaction time is dependent on the reaction temperature. As the reaction temperature rises, the reaction time generally becomes shorter. The reaction is usually carried out over a period of 30 minutes to about 100 days. Preferably, after practising the reaction at the predetermined temperature for a predetermined period of time, the reaction product is kept at a temperature lower than the reaction temperature, which is desirable from the view-point of preventing excessive progress of the reaction. Usually, the product is kept at a temperature at least 20-60°C lower than the reaction temperature.

The organic silicon compound is used in an amount of 0.01 to 5 moles, preferably 0.03 to 3 moles, and particularly 0.05 to 1.0 mole, per one mole of aluminum atom.

The amount of organoaluminum compound contained in the catalyst component (B) thus obtained to be used in the polymerization can be selected from the range of 1 to 1,000 moles, and particularly 5 to 600 moles, per one mole of titanium atom in the solid catalyst.

(e) Calculation of the K value

K is expressed by the following formula:

$$K = \frac{m}{Z} \cdot \frac{S'}{S+S'}$$

wherein m is identical with the m in the organoaluminum compound represented by the general formula $R^1{}_mAlY_{3-m}$ used for the preparation of the catalyst component (B); Z is the molar ratio of Si atoms to Al atoms contained in the catalyst component (B); and S and S′ are areas of the spectrums assigned to the Al-$R^1$ bond and the Si-$R^1$ bond formed by the reaction with the organoaluminum compound, respectively, of the catalyst component (B) measured by $^{13}$C-NMR ($R^1$ represents aliphatic hydrocarbon group having 1 to 8 carbon atoms).

Even if it is the same aliphatic hydrocarbon group $R^1$, $R^1$ linked to the Al atom and $R^1$ linked to the Si atom are different from each other in the chemical shift of $^{13}$C-NMR peak. When a hydrocarbon group is linked to a Si atom, the aliphatic hydrocarbon group and the alicyclic or aromatic hydrocarbon group are different from each other in the chemical shift of $^{13}$C-NMR spectrum (the peak of the alicyclic and aromatic hydrocarbon groups appears in a lower magnetic field region than the peak of the aliphatic hydrocarbon group). By utilizing this fact, the K value can be determined from S and S′.

The chemical shift of the Al-$R^1$ bond in the catalyst component (B) in $^{13}$C-NMR can be determined by carrying out the measurement by using $R^1{}_mAlY_{3-m}$ as standard sample. The chemical shift of the Si-$R^1$ bond in the $^{13}$C-NMR ca be determined by carrying out the measurement by using $R^2{}_n(R^1)Si(OR^3)_{3-n}$ ($R^2$ represents an alicyclic hydrocarbon group or aromatic hydrocarbon group having 5-20 carbon atoms, $R^3$ represents a hy-

drocarbon group having 1-20 carbon atoms, and n represents a number satisfying $0 \leq n \leq 3$) as a standard sample.

Hereunder, the method for determining S and S′ will be concretely explained by referring to a case when $R^1$ is an ethyl group as an example. When an organoaluminum compound having an ethyl group and an organic silicon compound having an ethyl group are subjected to the $^{13}$C-NMR measurement, the peaks appearing at chemical shifts of 0.4-1.2 ppm, 8.6-9.2 ppm, 4.1-5.1 ppm and 5.7-6.9 ppm (delta scale, lower magnetic field side with regard to TMS standard) are due to $CH_2(Al)$, $CH_3(Al)$, $CH_2(Si)$ and $CH_3(Si)$, respectively, and their chemical shifts hardly change even if the organoaluminum compound and the organic silicon compound coexist, as mentioned in VAEHAESARJA et al, Journal of Polymer Science: Part A, Vol. 25, 3241-3253 (1987). Accordingly, S can be determined by summing the peak areas of $CH_2(Al)$ and $CH_3(Al)$, and S′ can be determined by summing the peak areas of $CH_2(Si)$ and $CH_3(Si)$.

The $^{13}$C-NMR measurement may be carried out in the usual manner.

Concretely speaking, the catalyst component (B) is sealed into an NMR measuring tube in an atmosphere of nitrogen, and the measurement is carried out at 20 to 30°C at a pulse angle of 45°, pulse interval of 5 seconds and integration number of 2,000 or more (Fourier transformation is carried out by every 40 integration, and the transformation is repeated 50 times or more).

Concretely, the K value thus determined is considered an index roughly expressing the number of $R^1$ groups in the organoaluminum having transferred to the organic silicon compound.

According to this invention, K must be a value not smaller than 0.2 and not greater than 2.2, and a particularly desirable effect can be brought about when K is not smaller than 0.3 and not greater than 2.0.

(f) Method for polymerizing α-olefin

The method for feeding the catalyst components into the polymerization reactor is not critical, so long as they are fed in an inert gas such as nitrogen or argon and in a water-free state.

Catalyst components (A) and (B) may be fed separately or after a provious mutual contact.

The polymerization can be effected over a temperature range of -30°C to 200°C. However, in the low temperature region lower than 0°C, the polymerization velocity decreases, while at high temperatures higher than 100°C, no polymer having a high stereospecificity can be obtained. Preferably, therefore, the polymerization is carried out at a temperature ranging from 0°C to 100°C. Although the polymerization pressure is not critical, a pressure of about 3 to 100 atmospheres is preferable from the viewpoint of industrial practicability and economicity. The polymerization may be carried out by any of batch system and continuous system. Slurry polymerization using an inert hydrocarbon solvent such as propane, butane, pentane, hexane, heptane and octane, liquid phase polymerization using no solvent and gas phase polymerization are also adoptable.

Next, the alpha-olefins to which this invention is applicable are those having 3 or more carbon atoms. Concrete examples of the α-olefin include propylene, butene-1, pentene-1, hexene-1, 3-methyl-pentene-1 and 4-methyl-pentene-1, though this invention is by no means limited by these compounds. The polymerization of this invention may be any of homopolymerization and copolymerization including copolymerizations with ethylene. In the copolymerization, two or more kinds of olefins are mixed together and contacted with catalyst, whereby a copolymer is obtained.

Heteroblock copolymerization wherein polymerization is carried out in two or more steps can also be carried out easily.

It is also possible to add a chain transfer agent such as hydrogen for the purpose of regulating the molecular weight of polymer.

Next, this invention will be illustrated in more detail by way of the following examples and comparative examples.

Example 1

(a) Synthesis of organomagnesium compound

After replacing the inner atmosphere of a one liter flask equipped with a stirrer, a reflux condenser, a dropping funnel and a thermometer with argon gas, 32.0 g of sliced metallic magnesium for Grignard reaction was charged into the flask. Then, 120 g of butyl chloride and 500 ml of dibutyl ether were charged into the dropping funnel, and about 30 ml of the mixture was dropped onto the magnesium in the flask to start the reaction. After starting the reaction, the dropping was continued at 50°C over a period of 4 hours. After dropping it, the reaction was continued at 60°C for an additional one hour. Then, the reaction mixture was cooled to room temperature, and the solid material was filtered off.

The butylmagnesium chloride present in the dibutyl ether was hydrolyzed with 1N sulfuric acid and back-titrated with a 1N aqueous solution of sodium hydroxide to determine its concentration, by using phenolphthalein as indicator. As the result, its concentration was 2.1 mole/liter.

(b) Synthesis of solid product

After replacing the inner atmosphere of a 500 ml flask equipped with a stirrer and a dropping funnel with argon gas, 240 ml of hexane, 5.4 g (15.8 mmoles) of tetrabutoxytitanium and 61.4 g (295 mmoles) of tetraethoxysilane were charged and made into a uniform solution. Then, 150 ml of the organomagnesium compound synthesized in (a) was slowly dropped into the flask from the dropping funnel over a period of 4 hours, while keeping the inner temperature of the flask at 5°C. After dropping it, the resulting mixture was stirred at room temperature for one hour, and solid matter was separated from liquid at room temperature. The solid thus obtained was thrice washed with each 240 ml portion of hexane and then dried under reduced pressure to obtain 45.0 g of a brown colored solid product.

The solid product thus obtained contained 1.7% by weight of titanium, 33.8% by weight of ethoxy groups and 2.9% by weight of butoxy groups.

In the wide angle X ray (Cu-K$\alpha$ ray) diffraction pattern of this solid product, no clear diffraction pattern was observable at all, demonstrating its amorphous structure.

(c) Synthesis of ester-treated solid

After replacing the inner atmosphere of a 100 ml flask with argon gas, 6.5 g of the solid product synthesized in (b), 16.2 ml of toluene and 4.8 ml (16 mmoles) of diisobutyl phthalate were charged and reacted at 95°C for one hour.

After the reaction, solid matter was separated from liquid and thrice washed with each 33 ml portion of toluene.

(d) Synthesis of solid catalyst component (A)

After completing the washing step of (c), 16.2 ml of toluene, 0.36 ml (1.3 mmoles) of diisobutyl phthalate, 2.2 ml (13 mmoles) of n-butyl ether and 38.0 ml (346 mmoles) of titanium tetrachloride were charged into the flask and reacted at 95°C for 3 hours. After the reaction, the solid matter was separated from the liquid at 95°C and twice washed with each 33 ml portion of toluene at that temperature. Then, the above-mentioned treatment using diisobutyl phthalate and a mixture of n-butyl ether and titanium tetrachloride was repeated once more under the same conditions as above, and the treated product was thrice washed with each 33 ml portion of hexane to obtain 5.0 g of an ocher colored solid catalyst.

The solid catalyst component (A) thus obtained contained 2.1% by weight of titanium, 19.9% by weight of magnesium and 12.7% by weight of phthalic ester.

(e) Preparation of catalyst component (B)

After replacing the inner atmosphere of a 100 ml flask equipped with a stirrer with argon gas, 41.7 ml of heptane, 5.74 g (50 mmoles) of triethylaluminum and 1.49 g (7.5 mmoles) of phenyltrimethoxysilane were charged and reacted at 60°C for 4 hours with stirring.

After the reaction, about 2 ml of the reacted solution was sealed into an ampoule for NMR measurement having a diameter of 5 mm of which the inner atmosphere had been replaced with nitrogen. Using this sample $^{13}$C-NMR spectrum was measured under the following conditions: 30°C, pulse angle 45°, pulse interval 5 seconds, integration number 2,000 (Fourier transformation was carried out by every 40 integrations, and it was repeated 50 times). The K value was determined from the spectrum thus obtained. As the result, K was equal to 1.06.

(f) Polymerization of propylene

After replacing the inner atmosphere of a 3 liter agitation type stainless steel autoclave with argon gas, 2.6 ml of the solid catalyst component (B) solution synthesized in (e) and 8.8 mg of the solid catalyst component (A) synthesized in (d) were charged, and hydrogen was introduced until its partial pressure reached 0.33 kg/cm$^2$. Then, 780 g of liquefied propylene was charged. Temperature of autoclave was elevated to 80°C, and polymerization was carried out at 80°C for 2 hours. After completion of the polymerization, the unreacted monomer was purged. The resulting polymer was dried at 60°C for 2 hours under reduced pressure to obtain 285 g of a powdery polypropylene.

Accordingly, yield (g) of polypropylene per one gram of solid catalyst component (A) (hereinafter, referred to as "PP/cat") was equal to 32,400. The proportion (% by weight) of cold xylene-soluble fraction in the total polymer yield (hereinafter, referred to as "CXS") was equal to 1.2. Bulk density (g/ml) of the powdery polypropylene (hereinafter, referred to as "BD") was equal to 0.44.

Example 2

(a) Preparation of catalyst component (B)

Catalyst component (B) was prepared in the same manner as in Example 1 (e), except that the reaction time was altered to 6 hours. Measurement of $^{13}$C-NMR revealed that K was equal to 1.78.

(b) Polymerization of propylene

Polymerization of propylene was carried out in the same manner as in Example 1 (f), except that catalyst component (B) prepared in Example 2 (a) was used. Results of the polymerization were as follows: PP/cat = 40,200, CXS = 1.4, BD = 0.44.

Comparative Example 1

(a) Preparation of component (B)

Catalyst component (B) was prepared in the same manner as in Example 1 (e), except that the catalyst component (B) prepared at 25°C according to Example 1 (e) was immediately used for measurement of $^{13}$C-NMR and polymerization of propylene. $^{13}$C-NMR measurement revealed that no peak due to Si-Et bond was noticeable, and K was equal to zero.

(b) Propylene was polymerized in the same manner as in Example 1 (f), except that catalyst component (B) prepared in Comparative Example 1 (a) was used. Results of the polymerization were as follows: PP/cat = 22,100, CXS = 1.5, BD = 0.44. Since K value of the used catalyst component (B) was equal to zero which is smaller than 0.2, the catalytic activity was much lower than in Examples 1 and 2.

Comparative Example 2

(a) Preparation of catalyst component (B)

Catalyst component (B) was prepared in the same manner as in Example 1 (e), except that reaction time was altered to 10 hours. $^{13}$C-NMR measurement revealed that K = 2.30.

(b) Polymerization of propylene

Propylene was polymerized in the same manner as in Example 1 (f), except that catalyst component (B) prepared in Comparative Example 2 (a) was used. Results of the polymerization were as follows: PP/cat = 20,000, CXS = 6.4, BD = 0.40. Since the catalyst component (B) used in this polymerization had a K value of 2.30 which is greater than 2.2, activity and stereospecificity were much lower than in Examples 1 and 2.

Example 3

(a) Synthesis of solid product

After replacing the inner atmosphere of a 200 ml flask equipped with a stirrer and a dropping funnel with argon gas, 6.98 g of styrene-divinylbenzene copolymer (dvp = 0.51 cc/g, wherein dvp expresses pore volume in the pore radius range of 200 to 2,000 angstroms) which had been dried under reduced pressure at 80°C for one hour was charged together with 35.0 ml of n-heptane, 0.64 g (1.9 mmoles) of tetrabutoxytitanium and 6.70 g (32.1 mmoles) of tetraethoxysilane, and the resulting mixture was stirred at 30°C for 45 minutes.

Then, 16.9 ml of the organomagnesium compound synthesized in Example 1 (a) was dropped from the dropping funnel over a period of one hour, while keeping inner temperature of the flask at 5°C. After dropping it, the resulting mixture was stirred at 5°C for 45 minutes and then at 30°C for 45 minutes, and then the product was thrice washed with each 35 ml portion of n-heptane and dried under reduced pressure to obtain 12.4 g of a brown colored solid product.

The solid product thus obtained contained 0.47% by weight of titanium and 4.0% by weight of magnesium.

(b) Synthesis of solid catalyst component (A)

After replacing the inner atmosphere of a 100 ml flask with argon gas, 4.58 g of the solid product synthesized in the reduction of (a), 15.3 ml of toluene and 1.40 ml (5.23 mmoles) of diisobutyl phthalate were charged and reacted at 95°C for one hour.

After the reaction, solid matter was separated from liquid and twice washed with each 15.3 ml portion of toluene.

After washing it, 15.3 ml of toluene, 1.01 ml (5.97 mmoles) of n-butyl ether and 17.9 ml (163 mmoles) of titanium tetrachloride were added to the flask and reacted at 95°C for 3 hours. After the reaction, solid matter was separated from liquid at 95°C and twice washed with each 15.3 ml portion of toluene at that temperature. Then, the above-mentioned treatment using a mixture of n-butyl ether and titanium tetrachloride was repeated once more over a period of one hour, and the treated product was twice washed with each 15.3 ml portion of n-heptane and dried under reduced pressure to obtain 3.68 g of a brown colored solid catalyst component (A).

The solid catalyst component (A) contained 0.49% by weight of titanium, 5.4% by weight of magnesium and 1.5% by weight of phthalic ester.

(c) Polymerization of propylene

Propylene was polymerized in the same manner as in Example 2 (b), except that the solid catalyst component (A) prepared in (b) of this example was used. Results of the polymerization were as follows: PP/cat = 8,240, BD

= 0.42.

Comparative Example 3

Polymerization of propylene

Propylene was polymerized in the same manner as in Example 3 (c), except that the catalyst component (B) prepared in Comparative Example 1 (a) was used. Results of the polymerization were as follows: PP/cat = 4,140, CXS = 1.9, BD = 0.42. Since the catalyst component (B) used in this polymerization had a K value of zero which is smaller than 0.2, activity was much lower than in Example 3.

Example 4

(a) Synthesis of solid catalyst component (A)

A suspension was prepared by reacting 47.6 g (500 mmoles) of anhydrous magnesium chloride, 250 ml of decane and 234 ml (1,500 mmoles) of 2-ethylhexyl alcohol at 130°C for 2 hours. Then, 11.1 g (75 mmoles) of phthalic anhydride was added to the suspension and stirred and homogenized at 130°C for an additional one hour to dissolve the phthalic anhydride into the suspension. The homogeneous solution thus obtained was cooled to room temperature, and then it was dropwise added into 200 ml (18 moles) of titanium tetrachloride kept at -20°C over a period of one hour. After adding it, temperature of the resulting mixture was elevated to 110°C in 4 hours, and when it had reached 110°C, 28.0 ml (140 mmoles) of diisobutyl phthalate was added. The resulting mixture was stirred at that temperature for 2 hour. After reacting it for 2 hours, solid matter was collected by filtration while it was hot, and then it was again suspended into 2,000 ml of titanium tetrachloride and again reacted at 110°C for 2 hours. After the reaction, the solid matter was collected by filtration while it was hot, and then it was washed 5 times with each 300 ml portion of decane at 110°C and thereafter thrice with each 500 ml portion of hexane at room temperature and dried under reduced pressure to obtain solid catalyst component (A). The solid catalyst contained 2.0% by weight of titanium, 20.0% by weight of magnesium and 4.2% by weight of diisobutyl phthalate.

(b) Polymerization of propylene

Propylene was polymerized in the same manner as in Example 2 (b), except that the solid catalyst component (A) synthesized in (a) of this example was used. Results of the polymerization were as follows: PP/cat = 44,600, CXS = 4.4, BD = 0.36.

Comparative Example 4

Polymerization of propylene

Propylene was polymerized in the same manner as in Example 4 (b), except that the catalyst component (B) prepared in Comparative Example 1 (a) was used. Results of the polymerization were as follows: PP/cat = 20,800, CXS = 4.1, BD = 0.36. Since the catalyst component (B) used in this polymerization had a K value of zero which is smaller than 0.2, activity was much lower than in Example 4.

Example 5

(a) Synthesis of solid catalyst component (A)

The inner atmosphere of a 200 ml flask equipped with a dropping funnel and a stirrer was replaced with nitrogen gas. Into this flask, 8.6 g of silicon oxide (manufactured by DAVISON, trade name G-952, specific surface area 302 m$^2$/g, pore volume 1.54 m$^2$/g, mean pore radius 204 angstroms) (hereinafter, this silicon oxide is referred to as SiO$_2$) which had been calcined at 800°C for 7 hours under a stream of nitrogen gas was charged together with 40 ml of n-heptane. Then, 34.4 ml of 20% solution of n-butylethylmagnesium (hereinafter referred to as BEM) in n-heptane (46.1 mmoles as BEM itself) (manufactured by Texas Alkyls Co., trade name MAGALA BEM) was added and the resulting mixture was stirred at 90°C for 2 hours. After removing the supernatant by decantation, the solid product was washed with 70 ml of n-heptane at room temperature and the supernatant was removed by decantation. This washing with n-heptane was repeated further 4 times and then it was dried under reduced pressure to obtain 9.83 g of BEM-treated silica gel. After replacing the inner atmosphere of a 100 ml flask equipped with a stirrer with nitrogen gas, 2.37 g of the BEM-treated silica gel obtained above and 15 ml of n-heptane were charged into the flask to prepare a suspension. Then, a solution of 4.0 g (27 mmoles) of 2,2,2-trichlorethanol dissolved in 5 ml n-heptane was dropwise added thereto from the dropping funnel at 0°C over a period of 20 minutes. After stirring the resulting mixture at 0°C for one hour, temperature was elevated to 80°C in one hour, and then the mixture was stirred at this temperature for one hour. After the reaction, the product was washed at room temperature twice with each 20 ml portion of n-heptane and thereafter thrice with each 20 ml portion of toluene.

Then, 8.3 ml of toluene and 0.25 g of di-n-butyl phthalate were added and reacted at 50°C for 2 hours. Then, 12.5 ml of titanium tetrachloride was added and reacted at 90°C for 2 hours, and the product was twice washed with each 20 ml portion of toluene at 90°C. Then 8.3 ml of toluene and 12.5 ml of titanium tetrachloride were added and reacted at 90°C for 2 hours. Then, the product was six times washed with each 20 ml portion of n-hexane and dried under reduced pressure to obtain 2.25 g of solid catalyst component (A).

This solid catalyst component (A) contained 3.1% by weight of titanium, 4.4% by weight of magnesium and 3.2% by weight of di-n-butyl phthalate.

(b) Polymerization of propylene

Propylene was polymerized in the same manner as in Example 2 (b), except that the solid catalyst component (A) synthesized in (a) of this example was used. Results of the polymerization were as follows: PP/cat = 7,060, CXS = 2.4, BD = 0.40.

Comparative Example 5

Polymerization of propylene

Propylene was polymerized in the same manner as in Example 5 (b), except that the catalyst component (B) prepared in Comparative Example 1 (a) was used. Results of the polymerization were as follows: PP/cat = 3,700, CXS = 2.5, BD = 0.39. Since the catalyst component (B) used in this polymerization had a K value of zero which is smaller than 0.2, activity was much lower than in Example 5.

Example 6

(a) Preparation of catalyst component (B)

After replacing the inner atmosphere of a 200 ml flask equipped with a stirrer with argon gas, 83.3 ml of heptane, 11.4 g (100 mmoles) of triethylaluminum and 3.06 g (15 mmoles) of cyclohexyltrimethoxysilane were charged and reacted at 60°C for one hour with stirring. $^{13}$C-NMR was measured on this sample, from which K value was calculated. As the result, K was equal to 0.46.

(b) Polymerization of propylene

Propylene was polymerized in the same manner as in Example 1 (f), except that the catalyst component (B) prepared in (a) of this example was used. Results of the polymerization were as follows: PP/cat = 28,000, CXS = 1.2, BD = 0.43.

Example 7

(a) Preparation of catalyst component (B)

Catalyst component (B) was prepared in the same manner as in Example 6 (a), except that reaction time was altered to 2 hours. $^{13}$C-NMR measurement revealed that K was equal to 0.98.

(b) Polymerization of propylene

Propylene was polymerized in the same manner as in Example 1 (f), except that the catalyst component (B) prepared in (a) of this example was used. Results of the polymerization were as follows: PP/cat = 38,200, CXS = 1.3, BD = 0.43.

Comparative Example 6

(a) Preparation of catalyst component (B)

Catalyst component (B) was prepared in the same manner as in Example 6 (a), except that catalyst component (B) prepared according to Example 6 (a) at 25°C was immediately used in $^{13}$C-NMR measurement and polymerization of propylene.

$^{13}$C-NMR measurement revealed that no peak due to Si-Et bond was observable at all, and K was equal to zero.

(b) Polymerization of propylene

Propylene was polymerized in the same manner as in Example 6 (b), except that the catalyst component (B) prepared in (a) of this example was used. Results of the polymerization were as follows: PP/cat = 24,600, CXS = 1.4, BD = 0.43. Since the catalyst component (B) used in this polymerization had a K value of zero which is smaller than 0.2, activity was much lower than in Examples 6 and 7.

Comparative Example 7

(a) Preparation of catalyst component (B)

Catalyst component (B) was prepared in the same manner as in Example 6 (a), except that reaction time was altered to 8 hours. $^{13}$C-NMR measurement revealed that K was equal to 2.43.

(b) Polymerization of propylene

Propylene was polymerized in the same manner as in Example 6 (b), except that the catalyst component (B) prepared in (a) of this example was used. Results of the polymerization were as follows: PP/cat = 20,000, CXS = 5.9, BD = 0.43. Since the catalyst component (B) used in this polymerization had a K value of 2.43 which is greater than 2.2, activity and stereospecificity were much lower than in Examples 6 and 7.

## Claims

1. A process for producing a catalyst system comprising the combination of
(A) a solid catalyst component (A) containing at least magnesium, titanium, a halogen and an ester compound as indispensable components, and
(B) a catalyst component (B) produced by reacting an organoaluminum compound represented by the general formula $R^1_m AlY_{3-m}$, wherein $R^1$ represents an aliphatic hydrocarbon group having 1 to 8 carbon atoms, Y represents a halogen, hydrogen or an alkoxy group having 1 to 20 carbon atoms, and m represents a number satisfying $2 \leq m \leq 3$ with an organosilicium compound represented by the general formula $R^2_n Si(OR^3)_{4-n}$, wherein $R^2$ represents an alicyclic hydrocarbon group or an aromatic hydrocarbon group having 5 to 20 carbon atoms, $R^3$ represents a hydrocarbon group having 1 to 20 carbon atoms, and n represents a number satisfying $0 \leq n \leq 3$ in solution at temperatures in the range of -50°C to 200°C, until the product of this reaction satisfies the following formula:

$$0.2 \leq K \leq 2.2$$

wherein

$$K = \frac{m}{z} \cdot \frac{S'}{S+S'}$$

[S represents the area of a peak in the $^{13}$C-NMR spectrum of the reaction product assignable to the Al-$R^1$ bond, S' represents the area of a peak in the $^{13}$C-NMR of the product assignable to the Si-$R^1$ bond formed by the reaction with the organoaluminum compound, and Z represents the molar ratio of Si atoms to Al atoms in component (B)].

2. A process according to Claim 1, wherein the organoaluminum compound is a compound represented by the general formula

$Ethyl_m AlY_{3-m}$, wherein m represents a number satisfying $2 \leq m \leq 3$.

3. A process according to Claim 2, wherein the organoaluminum compound is triethylaluminum.

4. A process according to Claim 1, wherein the organosilicium compound is cyclohexyltrimethoxysilane or phenyltrimethoxysilane.

5. A process according to Claim 1, wherein the organoaluminum compound and the organosilicium compound are reacted for 30 minutes to about 100 days.

6. A process according to Claim 1, wherein the organosilicium compound is used in an amount of 0.01 to 5 moles per one mole of aluminum atom.

7. A process according to Claim 1, wherein the solid catalyst component (A) is produced by reducing an alkoxytitanium compound with an organomagnesium compound in the presence of an organic silicon compound having an Si-O bond to obtain a solid product, and treating the product with an ester compound and a mixture of an ether compound and $TiCl_4$.

8. A process according to Claim 1, wherein the solid catalyst component (A) is produced by dissolving a magnesium halide and/or alkoxymagnesium compound into an alcohol or ether, and thereafter treating the resulting solution with a titanium compound and an ester compound.

9. A catalyst system obtainable according to the process of any one of claims 1 to 8.

10. A process for producing an α-olefin polymer, which comprises homopolymerizing or copolymerizing an α-olefin, using a catalyst system according to claim 9.

11. A process according to Claim 10, wherein the amount of an organoaluminum compound to be used in the polymerization is selected from the range of 1 to 1,000 moles per one mole of titanium atoms in the solid catalyst.

12. A process according to Claim 10, wherein the polymerization is carried out at a temperature of 0° to 100°C and at a pressure of about 3 to 100 atmosphere.

**13.** A process according to Claim 10, wherein the $\alpha$-olefin is propylene, butene-1, pentene-1, hexene-1, 3-methyl-pentene-1, or 4-methyl-pentene-1.

**14.** A process according to Claim 10, wherein the copolymerization is carried out with an $\alpha$-olefin and ethylene.

**Patentansprüche**

**1.** Verfahren zur Herstellung eines Katalysatorsystems, umfassend die Kombination

(a) eines festen Katalysatorbestandteils (A), der wenigstens Magnesium, Titan, ein Halogenatom und eine Esterverbindung als unentbehrliche Bestandteile enthält, und

(b) eines Katalysatorbestandteils (B), der hergestellt wird durch Umsetzung einer Organoaluminiumverbindung der allgemeinen Formel $R^1_m AlY_{3-m}$, in der $R^1$ einen aliphatischen Kohlenwasserstoffrest mit 1 bis 8 Kohlenstoffatomen bedeutet, Y ein Halogen- oder Wasserstoffatom oder einen Alkoxyrest mit 1 bis 20 Kohlenstoffatomen bedeutet und m eine Zahl bedeutet, die der Bedingung $2 \leq m \leq 3$ genügt, mit einer Organosiliciumverbindung der allgemeinen Formel $R^2_n Si(OR^3)_{4-n}$, in der $R^2$ einen alicyclischen Kohlenwasserstoffrest oder einen aromatischen Kohlenwasserstoffrest mit 5 bis 20 Kohlenstoffatomen bedeutet, $R^3$ einen Kohlenwasserstoffrest mit 1 bis 20 Kohlenstoffatomen bedeutet und n eine Zahl ist, die der Bedingung $0 \leq n \leq 3$ genügt, in Lösung und in einem Temperaturbereich von -50 bis 200°C, bis das Reaktionsprodukt der folgenden Formel genügt:

$0,2 \leq K \leq 2,2$

$$K = \frac{m}{Z} \cdot \frac{S'}{S+S'}$$

[S bedeutet die Peakfläche im $^{13}$C-NMR-Spektrum des Reaktionsprodukts, die der Al-$R^1$-Bindung zuzuordnen ist, S' bedeutet die Peakfläche im $^{13}$C-NMR-Spektrum des Produkts, die der Si-$R^1$-Bindung, die bei der Reaktion mit der Organoaluminiumverbindung entsteht, zuzuordnen ist, und Z bedeutet das Molverhältnis von Siliciumatomen zu Aluminiumatomen in dem Bestandteil (B)].

**2.** Verfahren nach Anspruch 1, wobei die Organoaluminiumverbindung eine Verbindung der allgemeinen Formel $Ethyl_m AlY_{3-m}$ ist, in der m eine Zahl bedeutet, die der Bedingung $2 \leq m \leq 3$ genügt.

**3.** Verfahren gemäß Anspruch 2, wobei die Organoaluminiumverbindung Triethylaluminium ist.

**4.** Verfahren gemäß Anspruch 1, wobei die Organosiliciumverbindung Cyclohexyltrimethoxysilan oder Phenyltrimethoxysilan ist.

**5.** Verfahren nach Anspruch 1, wobei die Organoaluminiumverbindung und die Organosiliciumverbindung 30 Minuten bis ungefähr 100 Tage umgesetzt werden.

**6.** Verfahren gemäß Anspruch 1, wobei die Organosiliciumverbindung in einer Menge von 0,01 bis 5 Mol pro Mol Aluminiumatome verwendet wird.

**7.** Verfahren gemäß Anspruch 1, wobei der feste Katalysatorbestandteil (A) durch Reduktion einer Alkoxytitanverbindung mit einer Organomagnesiumverbindung in Gegenwart einer organischen Siliciumverbindung, die eine Si-O-Bindung aufweist, hergestellt wird, wobei ein festes Produkt erhalten wird, das mit einer Esterverbindung und einem Gemisch einer Etherverbindung und Titantetrachlorid behandelt wird.

**8.** Verfahren nach Anspruch 1, wobei der feste Katalysatorbestandteil (A) durch Auflösen eines Magnesiumhalogenids und/oder einer Alkoxymagnesiumverbindung in Alkohol oder Ether und anschließende Behandlung der erhaltenen Lösung mit einer Titanverbindung und einer Esterverbindung hergestellt wird.

**9.** Katalysatorsystem erhältlich gemäß dem Verfahren nach einem der Ansprüche 1 bis 8.

**10.** Verfahren zur Herstellung eines $\alpha$-Olefinpolymers, umfassend die Homopolymerisation oder Copolymerisation eines $\alpha$-Olefins unter Verwendung eines Katalysatorsystems nach Anspruch 9.

**11.** Verfahren nach Anspruch 10, wobei die Menge der bei der Polymerisation verwendeten Organoaluminiumverbindung im Bereich von 1 bis 1000 Mol pro Mol Titanatome im festen Katalysator liegt.

**12.** Verfahren gemäß Anspruch 10, wobei die Polymerisation bei einer Temperatur von 0 bis 100°C und bei einem Druck von 3 bis 100 Atmosphären durchgeführt wird.

13. Verfahren gemäß Anspruch 10, wobei das α-Olefin Propylen, But-1-en, Pent-1-en, Hex-1-en, 3-Methyl-pent-1-en oder 4-Methyl-pent-1-en ist.

14. Verfahren gemäß Anspruch 10, wobei die Copolymerisation mit einem α-Olefin und Ethylen durchgeführt wird.

**Revendications**

1. Procédé de préparation d'un système catalytique comprenant la combinaison de

(a) un composant de catalyseur solide (A) contenant au moins du magnésium, du titane, un halogène et un ester comme composants indispensables, et

(b) un composant de catalyseur (B), préparé par réaction d'un composé organoaluminique représente par la formule générale $R^1_m AlY_{3-m}$, dans laquelle $R^1$ représente un groupement hydrocarboné aliphatique à 1-8 atomes de carbone, Y représente un atome d'halogène, d'hydrogène ou un groupement alcoxy à 1-20 atomes de carbone et m représente un nombre remplissant la condi-tion $2 \leq m \leq 3$, avec un composé organosilicié représente par la formule générale $R^2_n Si(OR^3)_{4-n}$, dans laquelle $R^2$ représente un groupement hydrocarboné alicyclique ou un groupement hydrocarboné aromatique à 5-20 atomes de carbone, $R^3$ représente un groupement hydrocarboné à 1-20 atomes de carbone et n représente un nombre rem-plissant la condition $0 \leq n \leq 3$, en solution à des temperatures dans la gamme de -50°C à 200°C, jusqu'à ce que le produit de cette réaction satisfasse à la formule suivante

$$0,2 \leq K \leq 2,2$$

dans laquelle

$$K = \frac{m}{Z} \cdot \frac{S'}{S+S'}$$

[S représentant l'aire d'un pic dans le spec-tre de RMN $^{13}$C du produit de la reaction, attribuable à la liaison Al-$R^1$, S' représentant l'aire d'un pic dans le spectre de RMN $^{13}$C du produit, attribuable à la liaison Si-$R^1$ formée par la reaction avec le composé organoaluminique, et Z représentant le rapport molaire des atomes de Si aux atomes d'Al dans le composant (B)].

2. Procédé selon la revendication 1, dans lequel le composé organoaluminique est un compose représenté par la formule générale Ethy-le$_m$AlY$_{3-m}$, dans laquelle m représente un nombre remplissant la condition $2 \leq m \leq 3$.

3. Procédé selon la revendication 2, dans lequel le composé organoaluminique est le triéthylaluminium.

4. Procédé selon la revendication 1, dans lequel le composé organosilicié est le cyclohexyltrimethoxy-silane ou le phényltrimethoxysilane.

5. Procédé selon la revendication 1, dans lequel le composé organoaluminique et le composé organosilicié sont mis en réaction pendant 30 mn à environ 100 jours.

6. Procédé selon la revendication 1, dans lequel le composé organosilicié est utilise dans une proportion de 0,01 à 5 moles par mole d'atome d'aluminium.

7. Procédé selon la revendication 1, dans lequel le composant de catalyseur solide (A) est préparé par reduction d'un composé alcoxytitane avec un composé organomagnesien en présence d'un composé organosilicié comportant une liaison Si-O, pour obtenir un produit solide, et par traitement de ce produit par un ester et par un mélange d'un éther et de TiCl$_4$.

8. Procédé selon la revendication 1, dans lequel le composant de catalyseur solide (A) est préparé par dissolution d'un halogénure de magnésium et/ou d'un composé alcoxymagnesien dans un alcool ou un éther, puis par traitement de la solution résultante par un composé du titane et un ester.

9. Système catalytique, pouvant être obtenu par le procédé selon l'une quelconque des revendications 1 à 8.

10. Procédé de préparation d'un polymère d'α-oléfine, consistant à homopolymeriser ou copolymeriser une α-oléfine, en utilisant un système catalytique selon la revendication 9.

11. Procédé selon la revendication 10, dans lequel la quantité d'un composé organoaluminique à utiliser dans la polymérisation est choisie dans la gamme de 1 à 1000 moles par mole d'atomes de titane dans le catalyseur solide.

**12.** Procédé selon la revendication 10, dans lequel la polymérisation est effectuée à une température de 0° à 100°C et sous une pression d'environ 3 à 100 atm.

**13.** Procédé selon la revendication 10, dans lequel l'$\alpha$-oléfine est le propylène, le butène-1, le pentène-1, l'hexene-1, le 3-methylpentène-1 ou le 4-methylpentène-1.

**14.** Procédé selon la revendication 10, dans lequel la copolymerisation est effectuée avec une $\alpha$-oléfine et de l'éthylène.

# FIG . I

(A) TRANSITION METAL COMPONENT

Ti COMPOUND

Mg COMPOUND

HALOGEN COMPOUND

ESTER COMPOUND

POLYMERI-
ZATION

α − OLEFIN ( CO ) POLYMER

(B) ORGANOMETALLIC COMPONENT

$R^1_m \, Al \, Y_{3-m}$

R$^1$ : ALIPHATIC HYDROCARBON GROUP

Y : HALOGEN 、HYDROGEN 、ALKOXY GROUP

$2 \leqq m \leqq 3$

REACTION

(C) THE THIRD COMPONENT

$R^2_n \, Si \, ( OR^3 )_{4-n}$

R$^2$ : ALICYLIC OR AROMATIC HYDROCARBON
GROUP

R$^3$ : HYDROCARBON GROUP

$0 \leqq n \leqq 3$

In $^{13}$C−NMR MEASUREMENT :

$$K = \frac{m}{Z} \cdot \frac{S'}{S + S'}, \quad 0.2 \leqq K \leqq 2.2$$

m : THE SAME AS THE m OF $R^1_m \, Al \, Y_{3-m}$

Z : Si ∕ Al MOLAR RATIO

S : AREA OF THE PEAK DUE TO Al − R$^1$ BOND

S' : AREA OF THE PEAK DUE TO Si − R$^1$ BOND

EP 0 368 344 B1